**Europäisches Patentamt**

**European Patent Office**

**Office européen des brevets**

(11) Veröffentlichungsnummer: **0 446 594 A1**

# (12) EUROPÄISCHE PATENTANMELDUNG

(21) Anmeldenummer: **91101322.5**

(22) Anmeldetag: **01.02.91**

(51) Int. Cl.⁵: **F16B 21/07, //A44B17/00**

(30) Priorität: **07.03.90 DE 9002666 U**

(43) Veröffentlichungstag der Anmeldung:
**18.09.91 Patentblatt 91/38**

(84) Benannte Vertragsstaaten:
**AT BE CH DE ES FR GB IT LI NL SE**

(71) Anmelder: **William Prym-Werke GmbH & Co. KG**
**Zweifaller Strasse 130**
**W-5190 Stolberg/Rhld.(DE)**

(72) Erfinder: **Nysten, Bernhard, Dipl.-Ing.**
**Siegelallee 9**
**W-5100 Aachen(DE)**
Erfinder: **Hurtz, Winfried**
**Johannesstrasse 44**
**W-5190 Stolberg(DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

(54) Zugfester zweiteiliger Druckknopfverschluss.

㊗ Bei einem zugfesten Druckknopfverschluß besteht das Matrizenglied (10) aus einer ein Loch (31) in der Tragbahn (30) durchsetzenden Flanschhülse (11), deren Flansch im Montagefall an der Tragbahn-Oberseite (32) anliegt und von einem mit einer Innenschulter (16) endenden Hülsenoberteil (12) überragt wird. Im Hülseninneren (45) sind eine Schar von Klauen (27) koaxial (39) angeordnet, deren Klauenenden (28) radial spreizbar (59) sind, um im Entkupplungsfalle den Pilzkopf eines zugehörigen Matrizenglieds freizugeben. Die Klauenenden (28) werden aber durch Anlage ihrer Außenflächen (38) an der Verengung (37) des Hülsenunterteils (12) radial gegeneinander geklappt. Die oberen Klauenenden (58) sind mit einer Zughandhabe (20) versehen, die am Hülsenoberteil (12) sitzt und eine Baueinheit sowohl mit den Klauen (27) als auch mit einer Druckfeder (53) bildet, welche einerends an der Innenschulter des Hülsenoberteils (12) und anderends an der Zughandhabe (20) sich abstützt. Aus ihrer durch die Wirksamkeit der Druckfeder (53) bestimmten Ruhestellung kann die Zughandhabe (20) in eine Zugstellung überführt werden, wo die unteren Klauenenden sich in einem erweiterten Hohlraum oberhalb der Verengung im Hülsenunterteil (18) befinden und dort radial spreizbar sind. Der Hülsenunterteil (18) besitzt ein Außengewinde (44) zum Aufschrauben einer Mutter (40) zwecks Befestigung an der Tragbahn (30). Um die Wasserfestigkeit des Druckknopfverschlusses zu erhöhen, wird vorgeschlagen, den Flansch (13) wenigstens bereichsweise topfförmig zu gestalten und einstückig mit dem aus Kunststoff bestehenden Hülsenoberteil (12) auszubilden. Die Topfmantelwand (15) ist zunächst zur Tragbahn (30) hin geöffnet und dient zum Einführen eines einstückig mit dem Hülsenunterteil (18) ausgebildeten Radialrings (17). Die Topfmantelwand (15) wird dann um den Umfangsbereich des Radialrings (17) herumgebördelt, womit der Hülsenoberteil (12) mit dem Hülsenunterteil (18) wasserdicht verbunden sind.

EP 0 446 594 A1

## FIG. 1

Die Erfindung richtet sich auf einen Druckknopfverschluß der im Oberbegriff des Anspruches 1 angegebenen Art. Durch eine besondere Ausbildung des an der Tragbahn montierten Matrizengliedes ergibt sich eine hohe Zugfestigkeit, wenn es mit den pilzförmigen Schließflächen des am Träger befestigten Patrizenglieds gekuppelt ist. Dazu ist das Matrizenglied mit federbelasteten Klauen versehen, die im Kupplungsfall radial gegeneinandergedrückt sind und den Patrizenkopf umschließen. Auf ihrer Außenseite stützen sich die Klauen dabei an einer Verengung in einem Unterteil der Flanschhülse ab, weshalb ein Entkuppeln ausgeschlossen ist. Zum Entkuppeln wird eine am Patrizenglied befestigte Zughandhabe gegen eine Federbelastung betätigt, welche die Klauen in einen erweiterten Hohlraum der Flanschhülse überführt, wo sie zueinander radial gespreizt werden und dadurch den Pilzkopf des Patrizenglieds freigeben.

Dieser Druckknopfverschluß wird vorzugsweise bei Abdeckplanen im Wetterschutz eingesetzt. Die bekannten Druckknopfverschlüsse hatten den Nachteil, aus zahlreichen Teilen zu bestehen, die eine kostspielige Einzelherstellung und einen langwierigen Zusammenbau erforderten. Vor allem war aber der bekannte Druckknopfverschluß nicht ausreichend wasserfest und unterlag einer Korrosion, insbesondere wenn Salzwasser im Spiel war.

Der Erfindung liegt die Aufgabe zugrunde, einen einfach herzustellenden und zu montierenden Druckknopfverschluß der im Oberbegriff des Anspruches 1 genannten Art zu entwickeln, der weitgehend wasserdicht und korrosionsfest ist und sich, auch wenn er dem Wetter dauernd ausgesetzt ist, durch eine lange Lebensdauer auszeichnet. Dies wird erfindungsgemäß durch die in Anspruch 1 angeführten Maßnahmen erreicht, denen folgende besondere Bedeutung zukommt.

Durch die Topfform des Flansches im Hülsenoberteil läßt sich eine sehr schnell auszuführende und dabei äußerst dichte Verbindung mit dem Hülsenunterteil erzielen. Der Hülsenunterteil ist mit seinem einstückigen Radialring in den doppellagig umgefalteten Flanschbereich des Hülsenoberteils integriert. Wegen ihrer Ausbildung aus Kunststoff entsteht dadurch eine wasserdichte Kapsel um die im Kapselinneren befindlichen Bestandteile der Zughandhabe. Dazu sind nur zwei Bestandteile miteinander zu montieren. Eine wasserdichte Verbindung ergibt sich auch zur Zughandhabe hin, wenn man diese gemäß Anspruch 12 als einendig geschlossenen Zylinder ausbildet, der auf der Umfangsfläche des Hülsenoberteils axial geführt ist. Dazu tragen insbesondere die Maßnahmen nach Anspruch 13 bei. Das vereinfacht auch den Zusammenbau der Bestandteile im Bereich der Zughandhabe.

Diese Dichtigkeit läßt sich auch nach der Montage von der Unterseite oder der Oberseite der Tragbahn aus fördern, wenn man die auf dem Außengewinde des Hülsenunterteils verschraubbare Mutter gemäß Anspruch 2 ausbildet und diese oder den Flansch mit einer Dichtungsrippe gemäß Anspruch 3 versieht. Im erstgenannten Fall fungiert die am Flansch befindliche umbördelte Topfmantelwand des Hülsenoberteils als Widerlager bei dieser Abdichtung, im zweitgenannten Fall der Muttern-Endflansch.

Auch im Bereich des Patrizenglieds läßt sich eine Korrosionsfestigkeit verbessern, wenn man dazu die in Anspruch 4 hervorgehobene Kappe verwendet. Wegen der Baueinheit zwischen Kappe und Patrizenglied ist die Handhabung denkbar einfach, wobei auch die Dichtungsprobleme durch die Maßnahmen nach Anspruch 5 und 6 im Befestigungsbereich am Träger entscheidend verbessert werden. Der Zusammenbau ist weiter vereinfacht und die Korrosionsfestigkeit erhöht, wenn man die Bestandteile der Baueinheit durch die in Anspruch 7 hervorgehobenen Maßnahmen verbindet. Die umlaufende Lippe nach Anspruch 8 erhöht auch an dieser Stelle die Dichtigkeit.

Die Handhabung dieser Baueinheit läßt sich vereinfachen, wenn man die Maßnahme nach Anspruch 9 und insbesondere nach Anspruch 10 nutzt. Für die Befestigung des Patrizenglieds nutzt man die wirkungsvolle und bequeme Handhabung an der Kappe. Die Maßnahmen der Ansprüche 11, 16 und 17 verbessern jeweils die Steifigkeit und erhöhen vor allem die Zugfestigkeit des Verschlusses. Durch die Konusfläche nach Anspruch 11 werden die Klauen bei wachsender Zugbeanspruchung der Tragbahn zunehmend in ihre Kupplungsposition gedrückt. Alternative Möglichkeiten zur Topfausbildung des Hülsenflansches ergeben sich aus den Ansprüchen 14 und 15.

Weitere Maßnahmen und Vorteile der Erfindung sind aus den Zeichnungen und der nachfolgenden Beschreibung entnehmbar. Die Erfindung richtet sich dabei auf alle daraus erkennbaren neuen Merkmale und Merkmalskombinationen, auch wenn diese nicht ausdrücklich in den Ansprüchen angeführt sein sollten. In den Zeichnungen ist die Erfindung in zwei Ausführungsbeispielen dargetellt. Es zeigen:

Fig. 1 in Explosionsdarstellung und im Axialschnitt eine erste Ausführung des erfindungsgemäßen Matrizenglieds mit der zugehörigen Tragbahn und der zur ihrer Montage dienenden Mutter, wobei die Zughandhabe sich in ihrer Ruhestellung befindet,

Fig. 2 das Matrizenglied von Fig. 1, wobei aber die Zughandhabe betätigt worden ist und sich in ihrer Zugstellung befindet,

Fig. 3 die Unteransicht der Mutter von Fig. 1,

Fig. 4 im Axialschnitt und teilweise abgebrochen das zugehörige, seinerseits eine abgedichte Baueinheit bildende Patrizenglied,

Fig. 5 eine Draufsicht auf das Patrizenglied von Fig. 4,

Fig. 6 in einem der Fig. 1 entsprechenden Axialschnitt eine zweite Ausführungsform eines Bestandteils des bereits in Fig. 1 gezeigten Matzrizenglieds,

Fig. 7 den Bestandteil von Fig. 6 in Verbindung mit dem weiteren zum Matrizenglied gehörenden Bestandteil in einer zu Fig. 1 abgewandelten Ausführung und

Fig. 8 einen Axialschnitt der zur Montage des Matrizenglieds von Fig. 7 dienenden angepaßten Mutter.

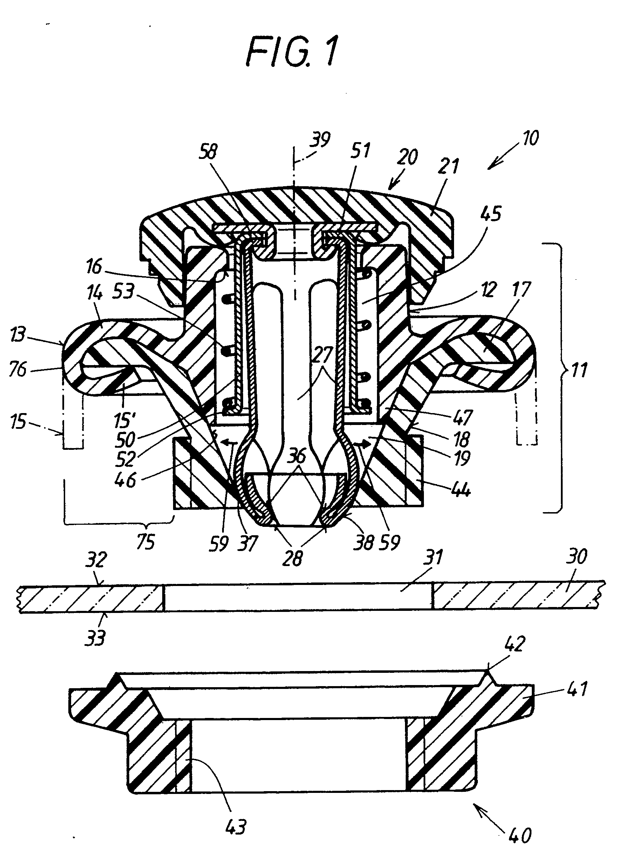

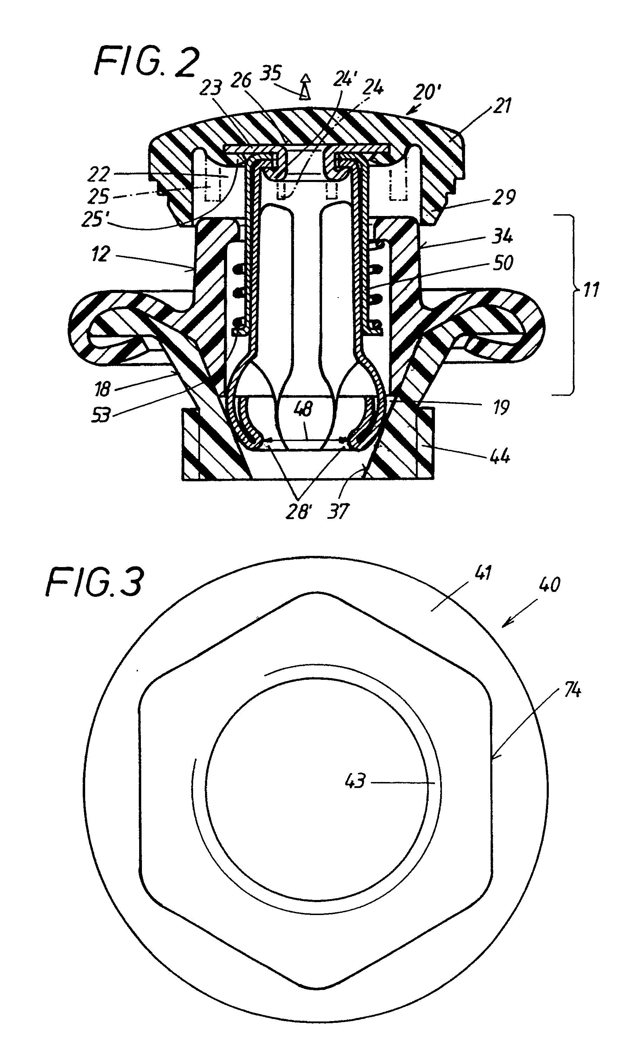

Gemäß Fig. 1 und 2 umfaßt der erfindungsgemäße Druckknopfverschluß ein aus zwei zueinander beweglichen Baugruppen zusammengesetztes Matrizenglied 10, nämlich eine Flanschhülse 11 und eine Zughandhabe 20. Die Flanschhülse 11 besteht nur aus zwei in sich einstückigen, aus Kunststoff bestehenden Bestandteilen, nämlich einem Hülsenoberteil 12 und einem Hülsenunterteil 18, die miteinander durch eine besondere Ausbildung eines topfförmigen Flansches 13 verbunden sind. Der topfförmige Flansch 13 ist einstückiger Bestandteil des Hülsenoberteils und umfaßt einen radialen Topfboden 14 und eine zunächst axial gestreckt verlaufende, in Fig. 1 strichpunktiert angedeutete Topfmantelwand 15. In diesem Ausführungsbeispiel erstreckt sich der Topf über die ganze aus Fig. 1 ersichtliche Radialbreite 75 des Flansches 13 und die Topfmantelwand 15 befindet sich an der Flansch-Umrißlinie 76. In diesen Hülsenoberteil 12 wird die Zughandhabe 20 in folgender Weise angebracht:

Wie aus Fig. 2 hervorgeht, gehört zur Zughandhabe, die sich dort in einer anderen Stellung 20' befindet, zunächst ein ebenfalls aus Kunststoff ausgebildeter geschlossener Zylinder 21, an dessen Zylinderboden 26, innenseitig, sich eine napfförmige Aufnahme 22 befindet. Diese besteht aus einer zunächst in Fig. 2 strichpunktiert angedeuteten axial gestreckten Napfwand 25. Diese dient zur Aufnahme des Niettellers 23 eines Hohlniets, dessen Nietschaft zunächst unverformt ist, wie strichpunktiert bei 24 in Fig. 2 zu erkennen ist. Nach der Einführung der Nietteller 23 liegt dieser am Zylinderboden 26 an, so wird die Napfwand unter Anwendung von Druck und/oder Wärme über den Nietteller 23 in die aus Fig. 2 ersichtliche Position 25' verformt. Damit bildet der geschlossene Zylinder 21 mit dem Niet 24 ein zusammenhängendes Vorprodukt. Dieses Vorprodukt wird nun im Hülseninneren 45 mit den weiteren Bestandteilen der eingangs erwähnten beweglichen Baugruppe des Patrizenglieds 20 zusammengebaut.

Zu dieser Baugruppe gehört zunächst ein Federhut 50 mit einer ihn umschließenden Druckfeder 53, die sich an einem Außenflansch 52 am inneren Federhut-Ende abstützt. Das äußere Federende dagegen kommt an einer Innenschulter 16 im Hülsenoberteil zu liegen. Zur Zughandhabe dienen auch aus Federblech gebildete koaxiale Klauen 27, deren freie Klauenenden 28 sich im Sinne der Pfeile 59 radial spreizen könnten. Die oberen Klauenenden 58 sind radial nach innen abgewinkelt und kommen an einem am äußeren Ende des Federhuts 50 vorgesehenen Innenflansch 51 zu liegen. Im Hülseninneren 45 werden diese Bestandteile dann durch Deformationen des Nietschaftes 24' gemäß Fig. 2 miteinander verbunden. Dazu wird ein nicht näher gezeigtes Nietwerkzeug in Achsrichtung 39 von Fig. 1 ins Hülseninnere 45 eingeführt.

In diesem zusammengebauten Zustand ist der Zylindermantel 29 dieser Zughandhabe an der Umfangsfläche 34 des Hülsenoberteils axial gleitgeführt. Unter der Wirkung der Druckfeder 53 wird die Zughandhabe 20 normalerweise in ihrer aus Fig. 1 ersichtlichen Ruhelage am Hülsenoberteil 12 gehalten. Mit diesem Zwischenprodukt 18, 20 wird nun der Hülsenunterteil 18 in folgender Weise vereinigt:

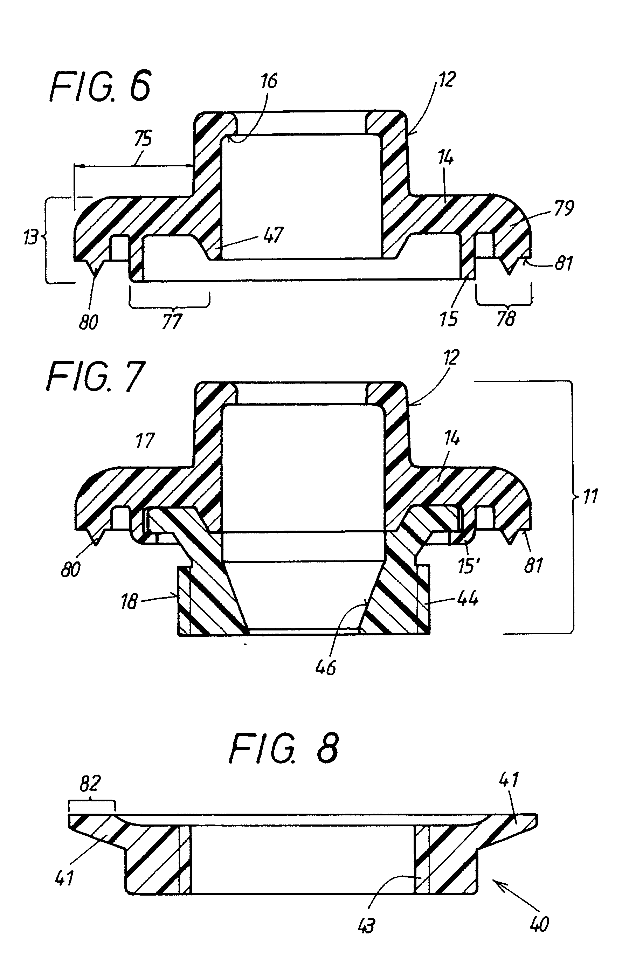

Der Hülsenunterteil 18 besitzt einen radialen Teller 17, mit welchem er einstückig aus Kunststoff erzeugt ist. Mit diesem Teller 17 wird nun der Hülsenunterteil 18 ins Topfinnere des Flansches 13 eingeführt, bis eine Berührung mit der Innenfläche des Topfbodens 14 erreicht ist. Dann wird die Topfmantelwand 15 radial in die aus Fig. 1 ersichtliche Position 15' durch Anwendung von Druck und/oder Wärme herumgelegt. Dadurch kommt ein Zusammenhalt zwischen den beiden Hülsenteilen 12, 18 zustande; es liegt, im Gegensatz zum zweiten Ausführungsbeispiel von Fig. 6 bis 8, eine "Außenbördelung" des Flansches 13 vor. Außen ist der Hülsenunterteil 18 mit einem Gewindegang 44 versehen, besitzt innen aber eine Konusfläche 46. Der Hülsenoberteil 12 besitzt einen axialen Ansatz 47, der dazu eine komplementäre Konizität besitzt, weshalb im zusammengebauten Zustand hier eine flächige Steckverbindung zwischen den beiden Teilen 12, 18 entsteht. Die beiden Teile richten sich koaxial zur Achse 39 selbst aus. Das Matrizenglied 10 ist damit fertiggestellt.

Wie aus Fig. 1 ersichtlich, wird das Matrizenglied 10 an einer Tragbahn 30 an einer mit einem Loch 31 versehenen Stelle befestigt. Das Matrizenglied 10 befindet sich dabei an der schauseitigen Oberseite dieser Tragbahn 30, durchragt das Loch 31 und wird auf der Tragbahnunterseite 33 mittels einer Mutter 40 befestigt. Die Mutter 40 besitzt dabei einen Endflansch 41, der auf seiner der Tragbahn 30 zugekehrten Seite mit einer Dichtungsrippe 42 versehen ist. Anstelle der Dichtungsrippe 42 könnte auch ein zugeschärfter Nocken 80, gemäß Fig. 6, an dieser Stelle vorgesehen sein, der einen Verdrehungsschutz bringt. Wie aus Fig. 3 entnehmbar, ist die Mutter oberhalb ihres Endflansches 41 mit einem unrunden Umriß versehen, der als Angriff für ein Schraubwerkzeug, wie einen Schraubenschlüssel, dient. Dazu ist dieser Umfangsbereich als Außensechskant 74 ausgebildet. Die Mutter 40 wird mit ihrem Mutterngewinde 43 auf das herausragende Außengewinde 44 des Matrizenglieds 10 aufgeschraubt. Dabei wird die Tragbahn 30 zwischen dem Endflansch 41 auf der einen Seite 33 und dem Matrizenflansch 13 auf der anderen Seite 32 eingeklemmt, wobei die Dichtungsrippe 42 dichtwirksam ist und der umgelegte Topfmantel 15' als Gegenrippe fungiert. Es kommt zu einer wasserfesten Einklemmung der Tragbahn 30.

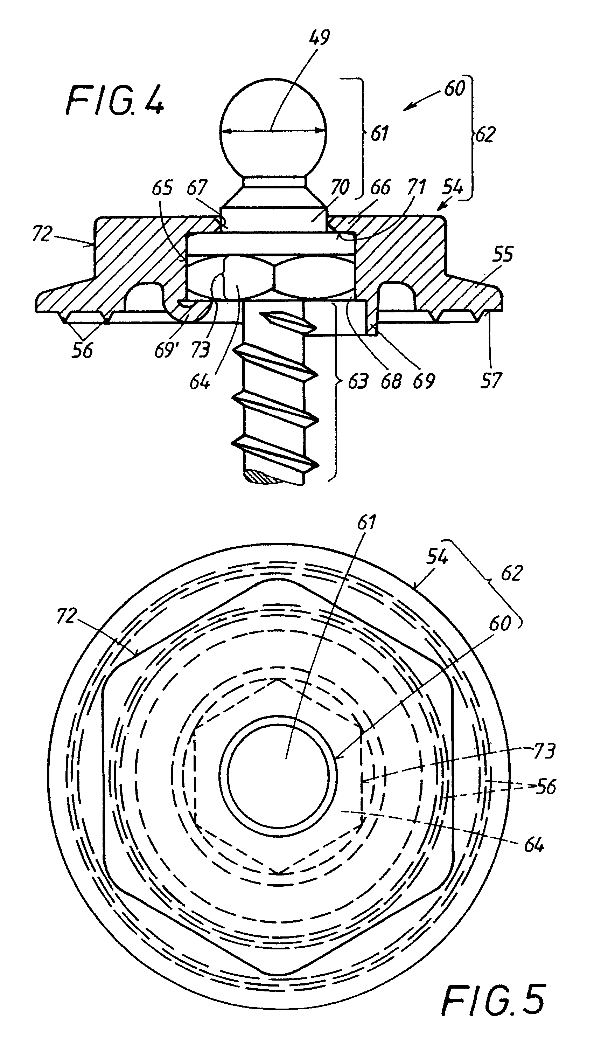

Die Konusfläche 47 im Unterteil 18 der Flanschhülse 11 ist mit einer Verengung 37 versehen, an welcher in der aus Fig. 1 ersichtlichen Ruhestellung 20 der Zughandhabe die vorerwähnten Klauenenden 28 mit ihrer Außenfläche 38 zur Anlage kommen. Dadurch werden die Klauenenden 28 radial gegeneinandergedrückt gehalten. Diese Ruhestellung 20 ist durch die Wirksamkeit der Druckfeder 53 bestimmt, in welcher der Kunststoffzylinder 21 der Handhabe 20 mit seiner Bodenfläche an der Stirnfläche des Hülsenoberteils 12 zur Anlage kommt. Die Klauen 27 sind durch Längsstege eines korbförmigen Körpers aus Federstahl gebildet und erzeugt an seinen Klauenenden 28 matrizenförmige Schließflächen 36, die komplementären Schließflächen 61 eines aus Fig. 4 ersichtlichen Patrizenglieds 60 entsprechen, welches noch näher beschrieben werden wird. Ist das Patrizenglied 60 vorausgehend mit seinen Schließflächen 61 in das Innere 36 der Klauenenden 28 eingeführt worden, so ist es dort zuverlässig gefangen. Sofern auf die mit dem Matrizenglied 10 ausgerüstete Tragbahn 30 Zugbeanspruchungen ausgeübt werden, z. B. durch Winddruck, so werden diese über die Verengung 37 auf die in den matrizenförmigen Schließflächen 36 eingekuppelten Bereiche 61 des Patrizenglieds 60 übertragen. Je höher die Zugbeanspruchungen sind, umso mehr werden die Klauenenden 28 von der konischen Verengung 37 dagegengedrückt. Ein Entkuppeln der beiden Glieder 10, 60 ist unmöglich. Dazu muß die Zughandhabe 20 bewußt betätigt werden, was in folgender Weise geschieht.

Um die pilzförmigen Schließflächen 61 des Patrizenglieds 60 ein- bzw. auskuppeln zu können, muß die Handhabe im Sinne des aus Fig. 2 ersichtlichen Zugpfeils 35 in die Zugstellung 20' überführt werden. Dazu wird der überstehende Randbereich des Kunststoffzylinders 21 genutzt. Dabei verschiebt sich der Zylindermantel 29 dichtwirksam über die Umfangsfläche 34 der Flanschhülse 11. Die Druckfeder 53 wird durch die sich gegeneinander bewegenden Anschläge 52, 16 zusammengedrückt. Dadurch gelangen die Klauenenden in den oberen, erweiterten konischen Hohlraum 19 des Hülsenunterteils 18 oberhalb der vorerwähnten Verengung 37. Sie können sich somit unter der radialen Federkraft im Sinne der aus Fig. 1 ersichtlichen Pfeile 59 zueinander spreizbewegen und gelangen in die aus Fig. 2 ersichtliche Spreizposition 28'. Jetzt schließen die Klauenenden 28' eine lichte Weite 48 ein, die größer als der Umfangsquerschnitt 49 des Pilzkopfes beim Patrizenglied 60 gemäß Fig. 4 ist. Damit lassen sich die pilzförmigen Schließflächen 61 in der Zugstellung 20' in das Matrizenglied 10 ein- bzw. auskuppeln.

Wird die Zughandhabe 20' losgelassen, so zieht die Druckfeder 53 den Kunststoffzylinder 21 selbsttätig wieder in die Ruhestellung 20 von Fig. 1 zurück. Die matrizenförmigen Schließflächen 36 sind dann unter Einschluß des Pilzkopfes 61 wieder geschlossen, wie bereits beschrieben wurde.

Das Patrizenglied 60 bildet zusammen mit einer ebenfalls aus Kunststoff gebildeten Kappe 54 eine Baueinheit 62. Dazu ist das Patrizenglied 60 mit zwei zueinander unterschiedlichen Funktionsteilen 61, 63 versehen, nämlich einerseits der bereits erwähnten pilzförmigen Schließfläche 61 am einen Gliedende und einer als Befestigungselement für einen nicht näher gezeigten Träger fungierenden Schraube 63. Diese Bestandteile sind einstückig, vorzugsweise aus Metall, gebildet. Sie liegen zueinander koaxial und sind durch einen radialen Teller 64 voneinander getrennt. Das so ausgebildete Patrizenglied 60 wird nun mit der erwähnten Kunststoffkappe 54 in folgender Weise vormontiert.

Die Kappe 54 besitzt zunächst auf ihrer dem Träger zugekehrten Seite einen Endflansch 55, der mit zwei koaxialen, den Schraubenteil 63 umschließenden Dichtungsrippen 56 versehen ist. Die Kappe 54 besitzt eine Aussparung 65, die zunächst zur Kappenunterseite 57 bei 68 offen ist und zur Aufnahme des radialen Tellers 64 vom Patrizenglied 60 dient. Der Kappenboden 66 im Aussparungsgrund ist mit einem Durchlaß 67 versehen, aus welchem die pilzförmigen Schließflächen 61 herausragen. Im Fußbereich der Schließflächen 61 befindet sich ein axialer Absatz, der nach dem Einführen des Patrizenglieds 60 in die Kappe 54 mit einer den Durchlaß 67 umgrenzenden Lippe zusammenwirkt. Neben diesem Absatz 70 befindet sich eine zum Tellerbereich gehörende radiale Schulter 71, an welcher die Innenfläche des Kappenbodens 66 zur Anlage kommt. Die Aussparungsöffnung 68 ist dabei von einer koaxial umlaufenden Manschette 69 umschlossen, die zunächst, wie im rechten Bereich von Fig. 4 zu erkennen ist, gestreckt verläuft.

Nach dem Einführen des Patrizenglieds 60 wird dann die Manschette 69 im Sinne des aus der linken Hälfte der Fig. 4 entnehmbaren Verlaufs radial nach innen durch Druck und/oder Wärme verformt und gelangt in die Position 69', in welcher die Außenfläche des radialen Tellers 64 übergriffen wird. Jetzt liegt die Baueinheit 62 zwischen den beiden Teilen 60, 54 vor, die nicht nur für einen axialen Zusammenhalt, sondern auch für eine drehfeste Verbindung dieser Teile sorgt. Der Teller 64 ist nämlich in einem Teilbereich 73 unrund ausgebildet, wie auch die Aussparung 65 mit einer dazu komplementären unrunden Seitenflächen versehen ist. Im vorliegenden Fall ist der Tellerumriß 73 als Sechskantkopf ausgebildet, weshalb die Aussparung 65 eine entsprechende Sechskanthöhle bildet. Die beiden Teile 60, 54 hängen axial- und drehfest miteinander zusammen.

Das Patrizenglied 60 wird nun an der gewünschten Stelle des mit der Tragbahn 30 von Fig. 1 auszurüstenden Stelle eines Trägers befestigt, was durch Einschrauben seines Befestigungselements 63 geschieht. Dazu ist die Kappe 54 oberhalb ihres Endflansches 55 mit einer unrunden Umfangsfläche 72 versehen, die als Angriffsstelle für ein Schraubwerkzeug, wie einen Steck- oder Gabelschlüssel dient. Aus diesem Grunde ist diese Umfangsfläche 52 als Außensechskant gestaltet. Dadurch ergeben sich für das Eindrehen des Patrizenglieds 60 wegen der größeren Entfernung zur Schraubenachse größere Hebelarme und damit eine größere Schraubkraft. Die Schraube 63 dringt also in den Träger durch Schraubbewegungen der Kappe 54 im Bereich des Außensechskants 72 ein. Nach vollzogener Befestigung liegt der Kappenendflansch 55 mit seinen Dichtungsrippen 56 an der Oberseite des Trägers an. Dadurch ist der unterhalb des Tellers 64 liegende Bereich des Patrizenglieds 60 wasserdicht abgeschirmt. Aber auch die pilzförmigen Schließflächen 61 sind wetterfest in der vorerwähnten matrizenförmigen Aufnahme 36 des aus Fig. 1 ersichtlichen Matrizenglieds 10 abgeschirmt. Damit ist im Ruhezustand bei übergestülpter Trägerbahn 30 kein metallischer Bestandteil der Druckknopfverbindung 10, 60 nach außen offen und einer Korrosion ausgesetzt. Aus diesem Grunde kann das Patrizenglied 60 als Stahlschraube ausgebildet sein. Es kann sich dabei um eine selbstschneidende Schraube handeln.

Es versteht sich, daß anstelle einer Schraube 60 auch andere Befestigungselemente für das Patrizenglied 60 verwendet werden könnten, wie z. B. Zackenringe od. dgl.. Anstelle der den Zusammenhalt zwischen dem Patrizenglied 60 und der Kunststoffkappe 54 bewirkenden Manschette 69 könnten auch ein Kranz von Segmenten an der Aussparungsöffnung 68 vorgesehen sein, die dann in der beschriebenen Weise radial verformt werden. Anstelle dieser Bauteile könnte schließlich auch das Patrizenglied 60 in die Kunststoffkappe 54 durch Einspritzen integriert sein. Eine weitere Variante bestünde darin, das Patrizenglied 60 hinsichtlich seiner beiden Funktionsteile 61, 63 zu trennen und beispielsweise die pilzförmigen Schließflächen 61 einstückig aus Kunststoff mit der Kappe 54 herzustellen. In diesem Falle würden die Abdichtungslippen und die Kappendurchlässe 67 entfallen.

Die Figuren 6 bis 8 zeigen, wie bereits eingangs erwähnt wurde, eine Alternative zum Ausführungsbeispiel von Fig. 1. Zur Bezeichnung analoger Bauteile sind die gleichen Bezugszeichen wie im ersten Ausführungsbeispiel verwendet, weshalb insoweit die bisherige Beschreibung gilt. Es genügt, lediglich auf die Unterschiede einzugehen.

Diese bestehen, ausweislich der Fig. 6, darin, daß die topfförmige Ausbildung des Flansches sich nicht über die volle Radialbreite 75, sondern nur über die innere Ringzone 77 erstreckt. Die zunächst gestreckt verlaufende Topfmantelwand 15 trennt diese innere Ringzone 77 von einer äußeren 78, die also die erwähnte Topfform radial überragt. Im Bereich der inneren Ringzone 77 vollziehen sich beim Zusammenbau des Matrizenglieds die gleichen Vorgänge, die im Zusammenhang mit Fig. 1 beschrieben worden sind und von denen die maßgeblichen Bauteile in Fig. 7 zu erkennen sind. Die Fig. 7 ist also durch die übrigen Bauteile von Fig. 1 ersetzt zu denken.

Wie aus Fig. 7 ersichtlich, wird die Verbindung zwischen dem Hülsenober- und -unterteil 12, 18 wieder durch eine Umbördelung 15' der Topfmantelwand erzeugt, die aber in diesem Ausführungsbeispiel innen liegt und daher als "Innenbördelung" des Flansches bezeichnet werden kann. Dazu ist auch der radiale Teller 17 des Hülsenunterteils 18 in seinem Außenmesser angepaßt.

Eine weitere Besonderheit dieses zweiten Ausführungsbeispiels besteht in einer besonderen Formgebung der äußeren Ringzone 78 dieses Flansches 13. Dazu ist der Randbereich 79 gegen den nicht näher gezeigten Träger gerichtet, so daß dieser Rand-Bereich im wesentlichen ein L-förmiges Radialprofil erhält. Dieser nach unten abgewinkelte Randbereich 79 gibt dem Flansch eine bedeutsame Steifigkeit. Die in Fig. 6 angedeutete Radialbreite 75 des gesamten Flansches kann unabhängig von der sich lediglich auf die innere Ringzone 77 beschränkenden Topfform wesentlich größer ausgebildet sein, was für die Verstärkung der Tragbahn 30 und ihres Loches 31 wünschenswert ist. An der gegen die Tragbahn gerichteten Stirnfläche 81 befinden sich zugeschärfte Nocken 80, die einen Verdrehungsschutz nach der Montage des Matrizenglieds an der Tragbahn 30 liefern. Anstelle solcher Nocken könnte auch hier eine Dichtungsrippe vorgesehen sein, wie sie im Zusammenhang mit Fig. 1 bereits erläutert worden ist.

Die Fig. 8 zeigt eine alternative Mutter 40, wie sie bei der Hülse 1 von Fig. 7 verwendet wird. Es gilt auch hier zunächst die bereits vorausgehende Beschreibung der Mutter im Zusammenhang mit Fig. 1 und 3. Der Unterschied besteht darin, daß anstelle der umlaufenden Rippe 42 eine glatte Widerlagerfläche 82 am Mutternendflansch 41 vorliegt, der im Montagefall mit den vorerwähnten Nocken 80 des Matrizenglieds zusammenwirkt.

Bezugszeichenliste:

| | |
|---|---|
| 10 | Matrizenglied |
| 11 | Flanschhülse |
| 12 | Hülsenoberteil |
| 13 | topfförmiger Flansch |
| 14 | Topfboden |
| 15 | Topfmantelwand (Ausgangszustand) |
| 15' | verformte Topfmantelwand (Verformungszustand) |
| 16 | Innenschulter |
| 17 | radialer Teller von 18 |
| 18 | Hülsenunterteil |
| 19 | erweiterter Hohlraum von 18 |
| 20 | Zughandhabe (Ruhestellung) |
| 20' | betätigte Zughandhabe (Zugstellung) |
| 21 | geschlossener Kunststoffzylinder |
| 22 | napfförmige Aufnahme in 21 |
| 23 | Nietteller |
| 24 | Nietschaft (Ausgangszustand) |
| 24' | deformierter Schaft (Verformungszustand) |
| 25 | Napfwand (Ausgangszustand) |
| 25' | deformierte Napfwand (Verformungszustand) |
| 26 | Zylinderboden |
| 27 | koaxiale Klauen |
| 28 | untere Klauenenden (Ruhestellung) |
| 28' | gespreizte Klauenenden (Zugstellung) |
| 29 | Zylindermantel |
| 30 | Tragbahn für 10 |
| 31 | Loch in 30 |
| 32 | Tragbahnoberseite von 30 |
| 33 | Tragbahnunterseite für 30 |
| 34 | Umfangsfläche von 12 |
| 35 | axialer Zugpfeil für 20 |
| 36 | matrizenförmige Schließfläche von 28 |
| 37 | Verengung |
| 38 | Außenfläche von 28 |
| 39 | Längsachse von 10 |
| 40 | Mutter |
| 41 | Mutternendflansch |
| 42 | Dichtungsrippe |
| 43 | Mutterngewinde |
| 44 | Außengewinde von 18 |
| 45 | Hülseninneres |

| | |
|---|---|
| 46 | Konusfläche von 18 |
| 47 | konischer axialer Ansatz von 12 |
| 48 | lichte Weite von 28' |
| 49 | Pilzkopf-Durchmesser |
| 50 | Federhut |
| 51 | Innenflansch von 50 |
| 52 | Außenflansch von 50 |
| 53 | Druckfeder |
| 54 | Kappe |
| 55 | Endflansch |
| 56 | Dichtungsrippe |
| 57 | Kappenunterseite |
| 58 | obere Klauenenden |
| 59 | Spreizbewegungs-Pfeil von 28 |
| 60 | Patrizenglied |
| 61 | Funktionsteil, pilzförmige Schließflächen |
| 62 | Baueinheit |
| 63 | Funktionsteil, Befestigungselement, Schraube |
| 64 | radialer Teller |
| 65 | Aussparung |
| 66 | Kappenboden |
| 67 | Durchlaß in 66 |
| 68 | Aussparungsöffnung |
| 69 | Manschette (Ausgangszustand) |
| 69' | deformierte Manschette (Verformungszustand) |
| 70 | axialer Absatz, Fußbereich von 61 |
| 71 | Schulter, Fußbereich von 61 |
| 72 | unrunde Umfangsfläche von 54 |
| 73 | unrunder Umrißbereich von 64 |
| 74 | Außensechskant von 40 |
| 75 | ganze Radialbreite von 13 (Fig. 1) |
| 76 | Flansch-Umrißlinie von 13 (Fig. 1) |
| 77 | innere Ringzone (Fig. 6, 7) |
| 78 | äußere Ringzone |
| 79 | Randbereich von 78 |
| 80 | Nocken |
| 81 | Stirnfläche von 79 |
| 82 | Widerlagerfläche von 41 (Fig. 8) |

## Patentansprüche

1. Zugfester zweiteiliger Druckknopfverschluß (10, 60) zwischen einer Tragbahn (30) und einem Träger,

   mit einem an der Tragbahn (30) montierbaren Matrizenglied (10) und einem am Träger befestigten, pilzförmig profilierte Schließflächen (61) aufweisenden Patrizenglied (60),

   wobei das Matrizenglied (10) aus einer ein Loch (31) in der Tragbahn (30) mit einem verengten (37) Hülsenunterteil (18) durchsetzenden Flanschhülse (11) besteht, deren Flansch im Montagefall an der Tragbahn-Oberseite (32) anliegt und dabei von einem mit einer Innenschulter (16) endenden Hülsenoberteil (12) überragt ist,

im Hülseninneren (45) eine Schar von Klauen (27) koaxial (39) angeordnet ist, deren untere Klauenenden (28) radial spreizbar (59) sind und mit ihren Innenflächen die im Kupplungsfall den Pilzkopf (61) umgreifenden matrizenförmigen Schließflächen (36) bilden, aber durch Anlage ihrer Außenflächen (38) an der Verengung (37) des Hülsenunterteils (12) radial gegeneinandergeklappt sind,

die oberen Klauenenden (58) zusammen mit dem Oberende (51) eines Federhuts (50) an einer zum Ein- und Auskuppeln des Patrizenglieds (60) dienenden Zughandhabe (20) befestigt sind, die am Hülsenoberteil (12) sitzt und eine Baueinheit mit dem Federhut (50), den Klauen (27) sowie einer Druckfeder (53) bildet, welche einerends an der Innenschulter (16) des Hülsenoberteils (12) und anderends am Federhut (50) sich abstützt (52),

die Handhabe aus ihrer Ruhestellung (20), wo die Klauenenden in ihrer Zuklapplage (28) an der Verengung (37) des Hülsenunterteils (18) gesichert sind, gegen die Druckfeder (53) in eine Zugstellung (20') überführbar ist, wo die unteren Klauenenden (28') in einem erweiterten Hohlraum (19) oberhalb der Verengung (37) sich befinden und unter Freigabe des Patrizenglieds (60) radial spreizbar (48) sind,

und der Hülsenunterteil (18) ein Außengewinde (44) aufweist, auf welchem eine Mutter (40) verschraubbar ist, die,. im Montagefall, die Tragbahn (30) gegen den Flansch (13) des Hülsen-Oberteils (12) preßt,

**dadurch gekennzeichnet,**

daß der Flansch (13) wenigstens bereichsweise topfförmig gestaltet ist, einen Topfboden (14) sowie eine zur Tragbahn (30) hin zunächst geöffnete Topfmantelwand (15) bildet und mit dem Hülsenoberteil (12) einstückig aus Kunststoff ausgebildet ist,

und die Topfmantelwand (15) um den Umfangsbereich eines Radialrings (17) herumgebördelt (15') ist, welcher mit dem Hülsenunterteil (18) einstückig ausgebildet ist und vorzugsweise aus Kunststoff besteht.

2. Druckknopfverschluß nach Anspruch 1, dadurch gekennzeichnet, daß die Mutter (40) aus Kunststoff einstückig mit einem der Tragbahn (30; 32) zugekehrten Endflansch (41) ausgebildet ist.

3. Druckknopfverschluß nach Anspruch 1 oder 2, dadurch gekennzeichnet, daß der Muttern-Endflansch (41) und/oder der Flansch (13) des Hülsenoberteils (12) eine gegen die Tragbahn gerichtete umlaufende, zugespitzte Dichtungsrippe (42) bzw. eine Verdrehungssicherheit nach der Montage gewährende zugeschärfte Nocken (80) trägt, (vergl. Fig. 1 oder 7).

4. Druckknopfverschluß nach einem oder mehreren der Ansprüche 1 bis 3, dadurch gekennzeichnet, daß das vorzugsweise einstückige Patrizenglied (60) aus zwei unterschiedlichen Funktionsteilen (61; 63) an seinen beiden Enden besteht, nämlich aus den pilzförmigen Schließflächen (61) am einen Gliedende und aus einem am Träger angreifenden Befestigungselement, wie einer Schraube (63), am anderen Gliedende,

zwischen den beiden Funktionsteilen (61; 63) ein radialer Teller (64) angeordnet ist, der im Befestigungsfall sich am Träger abstützt

und daß der radiale Teller (64) von einer Kappe (54) umschlossen ist, die mit dem Patrizenglied (60) eine beim Befestigungsvorgang gemeinsam zu handhabende Baueinheit (62) bildet, aus welcher die pilzförmigen Schließflächen (61) herausragen.

5. Druckknopfverschluß nach Anspruch 4, dadurch gekennzeichnet, daß die Kappe (54) aus Kunststoff gebildet ist und auf ihrer dem Träger zugekehrten Unterseite (57) wenigstens eine das Befestigungselement (63) umschließende Dichtungsrippe (56) aufweist.

6. Druckknopfverschluß nach Anspruch 4 oder 5, dadurch gekennzeichnet, daß die Kappe (54) einstückig mit einem dem Träger zugekehrten Endflansch (55) gestaltet ist.

7. Druckknopfverschluß nach einem oder mehreren der Ansprüche 4 bis 6, dadurch gekennzeichnet, daß die Kappe (54) eine zur Kappenunterseite (57) hin offene Aussparung (65) als Aufnahme für den Teller (64) des Patrizenglieds (60) besitzt, der im Aussparungsgrund befindliche Kappenboden (66) einen Durchlaß (67) für die pilzförmigen Schließflächen (61) aufweist

und die Öffnung (68) der Aussparung von einer an der Kappe angeformten Manschette (69) bzw. Manschette-Segmenten umschlossen ist, die nach Einführen des Patrizenglieds (60) gegen die Unterseite des Tellers (64) anformbar (69') ist bzw. sind.

8. Druckknopfverschluß nach einem oder mehreren der Ansprüche 4 bis 7, dadurch gekennzeichnet, daß der Durchlaß (67) im Kappenboden (66) mit einer umlaufenden Lippe versehen ist, die bei eingeführtem Patrizenglied (60) abdichtend im Fußbereich (70, 71) der pilzförmigen Schließflächen (61) anliegt.

9. Druckknopfverschluß nach einem oder mehreren der Ansprüche 4 bis 8, dadurch gekennzeichnet, daß der Teller wenigstens bereichsweise (73) einen unrunden Umriß (73) aufweist, insbesondere mit einem Sechskantkopf ausgebildet ist, und die Aussparung (65) eine dazu komplementäre, unrunde Seitenfläche besitzt, vorzugsweise als Sechskanthöhle gestaltet ist.

10. Druckknopfverschluß nach einem oder mehreren der Ansprüche 4 bis 9, dadurch gekennzeichnet, daß die Kappe (54), vorzugsweise oberhalb ihres Endflansches (55), eine unrunde Umfangsfläche (72) besitzt, die als Angriffsstelle für ein Schraubwerkzeug, wie einen Steck- oder Gabelschlüssel, dient.

11. Druckknopfverschluß nach einem oder mehreren der Ansprüche 1 bis 10, dadurch gekennzeichnet, daß das Innere des Hülsenunterteils (18) sich zum unteren Ende hin konisch (46) verjüngt.

12. Druckknopfverschluß nach einem oder mehreren der Ansprüche 1 bis 11, dadurch gekennzeichnet, daß die Zughandhabe (20) einen einstückig aus Kunststoff gebildeten, endseitig geschlossenen Zylinder (21) aufweist, dessen Zylindermantel (29) auf der Umfangsfläche (34) des Hülsenoberteils (12) axialgeführt ist.

13. Druckknopfverschluß nach Anspruch 12, dadurch gekennzeichnet, daß im Zylinderinneren (21) eine napfförmige Aufnahme (22) für den Nietteller (23) eines insbesondere mit einem Hohlschaft (24) ausgebildeten Niets vorgesehen ist, der die Bestandteile der baueinheitlichen Zughandhabe (20) zusammenhält, wobei die Napfwände (25) gegen die freiliegende Seite des Niettellers (23) radial verformbar (25') sind, (vergl. Fig. 2).

14. Druckknopfverschluß nach einem oder mehreren der Ansprüche 1 bis 13, dadurch gekennzeichnet, daß der Flansch (13) des Hülsenoberteils (12) in seiner ganzen Radialbreite (75) topfförmig gestaltet ist und die Topfmantelwand (15) an der Flansch-Umrißlinie (76) sitzt, (Fig. 1).

15. Druckknopfverschluß nach einem oder mehreren der Ansprüche 1 bis 13, dadurch gekennzeichnet, daß lediglich eine innere Ringzone (77) vom Flansch (13) topfförmig gestaltet ist und die Topfmantelwand (15) von einer äußeren Ringzone (78) radial überragt wird.

16. Druckknopfverschluß nach Anspruch 15, dadurch gekennzeichnet, daß die äußere Ringzone (78) einen gegen den Träger (30) gerichteten Randbereich (79) besitzt, (vergl. Fig. 6, 7).

17. Druckknopfverschluß nach Anspruch 13 und 16, dadurch gekennzeichnet, daß die Dichtungsrippe (42) und/oder der Drehsicherungs-Nocken (80) an der gegen den Träger (30) gerichteten Stirnfläche (81) des Flansch-Randbereichs (79) sitzt.

# FIG. 1

FIG. 2

FIG.3

FIG. 4

FIG. 5

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 130 10 (MORTON)<br>* Seite 1, Zeile 74 - Seite 2, Zeile 42; Ansprüche 1,2,5; Figuren 17,18 *<br>– – – | 1-17 | F 16 B 21/07 //<br>A 44 B 17/00 |
| Y | CH-A-4 428 33 (R. KRÄHENBÜHL WERKZEUGBAU UND INJECTIONS PLASTIQUES)<br>* Spalte 1, Zeile 13 - Spalte 2, Zeile 18; Figur 1 *<br>– – – | 1-17 | |
| A | US-A-4 154 138 (MELONE)<br>* Spalte 3, Zeilen 11-25; Figuren 1-3 *<br>– – – | 3-7,10 | |
| A | GB-A-1 019 186 (CARR FASTENER CO., LTD)<br>* Seite 1, Zeile 57 - Seite 2, Zeile 65; Figuren 1-3 *<br>– – – – – | 3,15-17 | |

|  | RECHERCHIERTE SACHGEBIETE (Int. Cl.5) |
|---|---|
| | A 44 B<br>B 60 P<br>F 16 B |

Der vorliegende Recherchenbericht wurde für alle Patentansprüche erstellt

| Recherchenort | Abschlußdatum der Recherche | Prüfer |
|---|---|---|
| Den Haag | 14 Juni 91 | CALAMIDA G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument